**Europäisches Patentamt**

**European Patent Office**

**Office européen des brevets**

(19)

(11) Veröffentlichungsnummer: **0 195 942**
**A2**

## EUROPÄISCHE PATENTANMELDUNG

(12)

(21) Anmeldenummer: **86102423.0**

(22) Anmeldetag: **25.02.86**

(51) Int. Cl.⁴: **C 08 F 265/04**
**//**
**C08F114/06 ,(C08F265/04,**
**214:06)**

(30) Priorität: **26.03.85 DE 3510899**

(43) Veröffentlichungstag der Anmeldung: **01.10.86**
**Patentblatt 86/40**

(84) Benannte Vertragsstaaten: **BE CH DE FR GB IT LI NL SE**

(71) Anmelder: **HÜLS AKTIENGESELLSCHAFT,**
**Patentabteilung / PB 15 - Postfach 13 20,**
**D-4370 Marl 1 (DE)**

(72) Erfinder: **Thunig, Dieter, Dr., Hammerstrasse 1,**
**D-4370 Marl (DE)**
Erfinder: **Terwonne, Rolf-Walter, Dormagener**
**Strasse 17, D-4370 Marl (DE)**

(54) **Verfahren zur Herstellung eines rieselfähigen Polyvinylchlorids mit hohen Anteilen an Acrylatelastomeren.**

(57) Herstellung eines rieselfähigen Polyvinylchlorids mit einem Acrylatgehalt von mindestens 30 Gewichtsprozent, wobei die Emulsionspolymerisation eines Acrylsäureesters, der weiche Polymere bildet, zusammen mit einem Dien-Vernetzer

a) in Gegenwart einer Fettsäure-Seife oder
b) durch absatzweise oder kontinuierliche Zugabe des mit einer wäßrigen Laurylsulfatlösung voremulgierten Monomeren während der Polymerisation und Zusatz einer Fettsäure-Seife nach der Polymerisation erfolgt,

und die Vinylchlorid-Polymerisation in Gegenwart einer Methylcellulose als Suspensionsmittel durchgeführt wird, wobei nach der Suspensionsmittelzugabe eine $Ca(OH)_2$-Suspension zugefügt, der Polymerisationsansatz durch Zugabe einer Säure neutralisiert und sodann ein organisches Peroxid als Initiator in gelöster oder suspendierter Form zugegeben wird. Die Polymerisation kann auch ohne Säure-Zugabe und mit Azokatalysatoren erfolgen. Die S-Polymerisation wird nicht durch Wandanbackungen gestört, und man erhält nicht klebende, rieselfähige Polymere enger Korngrößenverteilung.

<u>Verfahren zur Herstellung eines rieselfähigen Polyvinylchlorids mit</u>
<u>hohen Anteilen an Acrylatelastomeren</u>

Es ist bereits bekannt, polyacrylathaltiges Polyvinylchlorid herzustellen. Zu diesem Zweck führt man die Polymerisation des Vinylchlorids
in Gegenwart der Dispersion des Polyacrylsäureesters durch und erhält dabei hochschlagzähe Massen (vgl. DE-PS 10 82 734, DE-PS 10 90 856). Bei
dieser Verfahrensweise hat es sich außerdem als nützlich erwiesen,
die vor der Pfropfpolymerisation erfolgende Polymerisation des Acrylsäureesters in Gegenwart geringer Mengen einer mehrfach ungesättigten
Verbindung als Vernetzer durchzuführen (vgl. DE-PS 10 90 857). Auf
diese Weise lassen sich polyacrylhaltige Vinylchloridpolymerisate mit
bis zu 25 Gewichtsprozent an Polyacrylat herstellen (vgl. DE-PS
10 82 734, Patentanspruch).

Will man jedoch Vinylchlorid-Polymerisate mit höherem Gehalt an Polyacrylsäureestern, d. h. Konzentrate, wie man sie benötigt, wenn man
daraus schlagfestes Polyvinylchlorid zu beliebigem Zeitpunkt, in beliebiger Konzentration und an beliebigem Orte herstellen will, so führt
dies zu Schwierigkeiten bei der Polymerisation und bei den so erhaltenen
Produkten.

Vor allem verstärkt sich die Verkrustung an der Reaktorwand mit zunehmendem Polyacrylsäureesteranteil. Dies macht es erforderlich, daß aufwendige Reinigungsoperationen durch mechanische Maßnahmen oder durch
Auskochen mit Lösungsmittel viel zu oft erfolgen müssen. Zudem wird
die Wärmeabfuhr gestört, was unkontrollierte Reaktionsabläufe zur Folge
haben kann. Die erhaltenen Produkte lassen sich nur schwer filtrieren,
und beim Trocknen neigen sie zum Verkleben.

Zu diesen Schwierigkeiten, welche die Herstellung von Vinylchloridpolymerisaten mit hohen Polyacrylsäureesteranteilen (> 25 Gewichtsprozent) unwirtschaftlich machen, kommt hinzu, daß die Eigenschaften der
Endprodukte sich auf einem für den Verarbeiter unbefriedigenden Niveau
befinden. Die Korngrößenverteilung ist vergleichsweise breit, das Produkt
verklebt bei der Lagerung, ist schlecht rieselfähig und zeigt eine
niedrige Schüttdichte.

0195942

Diese Nachteile des Standes der Technik wurden überwunden durch ein Verfahren zur Herstellung eines rieselfähigen Polyvinylchlorids mit einem Acrylatgehalt von mindestens 30 Gewichtsprozent durch Emulsionspolymerisation des Acrylsäureesters in Gegenwart eines wasserlöslichen Katalysators unter Zusatz eines Monomeren mit mindestens 2 ethylenisch ungesättigten, nicht konjugierten Bindungen und anschließender Suspensionspolymerisation von Vinylchlorid in Gegenwart der Polyacrylsäureesterdispersion, das dadurch gekennzeichnet ist, daß

die Emulsionspolymerisation eines Acrylsäureesters, dessen Polymere eine Glasumwandlungstemperatur < -15 °C zeigen,

a) in Gegenwart eines Alkalisalzes einer 12 bis 18 C-Atome enthaltenden Fettsäure als Emulgator mit einem Ausgangs-pH-Wert > 9, gegebenenfalls in Gegenwart eines Puffers, oder

b) in Gegenwart von Alkali-Laurylsulfat als Emulgator, und zwar durch absatzweise oder kontinuierliche Zugabe des mit einer wäßrigen Alkali-Laurylsulfatlösung voremulgierten Monomeren während der Polymerisation erfolgt,

und die Vinylchlorid-Polymerisation in Gegenwart einer Methylcellulose als Suspensionsmittel durchgeführt wird, wobei nach der Suspensionsmittelzugabe eine $Ca(OH)_2$-Suspension zugefügt, der Polymerisationsansatz durch Zugabe einer Säure neutralisiert und sodann ein organisches Peroxid als Initiator in gelöster oder suspendierter Form zugegeben wird.

Eine andere technische Lösung der geschilderten Problematik besteht in einem Verfahren zur Herstellung eines rieselfähigen Polyvinylchlorids mit einem Acrylatgehalt von mindestens 30 Gewichtsprozent durch Emulsionspolymerisation des Acrylsäureesters in Gegenwart eines wasserlöslichen Katalsators unter Zusatz eines Monomeren mit mindestens 2 ethylenisch nicht konjugierten ungesättigten Bindungen und anschließender Suspensionspolymerisation von Vinylchlorid in Gegenwart der Polyacrylsäureesterdispersion, das dadurch gekennzeichnet ist, daß

die Emulsionspolymerisation eines Acrylsäureesters, dessen Polymere eine Glasumwandlungstemperatur < -15 °C zeigen,

0195942

a) in Gegenwart eines Alkalisalzes einer 12 bis 18 C-Atome enthaltenden Fettsäure als Emulgator mit einem Ausgangs-pH-Wert > 9, gegebenenfalls in Gegenwart eines Puffers, oder

b) in Gegenwart von Alkali-Laurylsulfat, und zwar durch absatzweise oder kontinuierliche Zugabe des mit einer wäßrigen Alkali-Laurylsulfatlösung voremulgierten Monomeren während der Polymerisation erfolgt,

und die Vinylchlorid-Polymerisation in Gegenwart einer Methylcellulose als Suspensionsmittel durchgeführt wird, wobei nach der Suspensionsmittelzugabe eine $Ca(OH)_2$-Suspension zugefügt und sodann ein Azokatalysator in gelöster oder suspendierter Form zugegeben wird.

Vorzugsweise wird man die $Ca(OH)_2$-Suspension bei einer Temperatur von 50 °C bis zur Polymerisationstemperatur zugeben. Die Zugabemenge des $Ca(OH)_2$, gerechnet als CaO, beträgt zweckmäßigerweise 0,6 bis 1,5 Gewichtsprozent, bezogen auf eingesetztes Polyacrylat.

Vorzugsweise zeigt die Methylcellulose eine Viskosität der 2 %igen wäßrigen Lösung von 40 bis 3 000 mPa s.

Vor der Zugabe des organischen Peroxids wird der Suspensionspolymerisationsansatz vorzugsweise mit Weinsäure neutralisiert.

Bei der Emulsionspolymerisation nach der Arbeitsweise b) ist die Alkalisulfatkonzentration vorzugsweise 0,3 bis 0,7 Gewichtsprozent, insbesondere < 0,3 Gewichtsprozent, bezogen auf Acrylatmonomeres.

Nach Beendigung der Emulsionspolymerisation werden zweckmäßigerweise 0,5 bis 2,0 Gewichtsprozent, bezogen auf Acrylat, eines Alkalisalzes einer 12 bis 18 C-Atome enthaltenden Fettsäure zugegeben, damit die Polyacrylatdispersion stabil bleibt. Als Alkalisalze von Fettsäuren, welche als Emulgatoren bei der Arbeitsweise a) oder b) eingesetzt werden können, kommen in Betracht: Na-laurat, Na-myristat, Na-palmitat, Naisopalmitat, Na-stearat. Auch die entsprechenden K-Salze sind geeignet.

Als Alkali-Laurylsulfat läßt sich Na- oder K-Laurylsulfat anwenden.

Bei der Arbeitsweise a) sollte das Fettsäuresalz in einer Konzentration von 0,85 bis 2,5 Gewichtsprozent, bezogen auf Acrylatmonomeres, eingesetzt werden. Der pH-Wert sollte mit NaOH bzw. KOH auf > 9, höchstens jedoch auf 11 eingestellt werden.

Als Puffer sind gegebenenfalls geeignet: Na-Tetraborat, $K_2HPO_4$, $Na_4P_2O_7$ und $Na_2CO_3$. Man wird Pufferkonzentrationen von 0,1 bis 2,0 Gewichtsprozent, bezogen auf Acrylat, anwenden.

Bei der Arbeitsweise b) werden 40 bis 70 Gewichtsteile Wasser mit dem Initiator vorgelegt und nach dem Aufheizen auf Polymerisationstemperatur die aus 90 bis 60 Teilen Wasser, 0,2 bis 0,3 Gewichtsteilen Laurylsulfat mit 100 Gewichtsteilen Acrylat durch Homogenisieren hergestellte Emulsion des Acrylats absatzweise oder kontinuierlich während der Polymerisation zugegeben.

Der Vorteil bei dieser Arbeitsweise ist, daß Dispersionen mit enger Teilchengrößenverteilung und geringem Emulgatorgehalt hergestellt werden können.

Als monomere Acrylsäureester sind solche geeignet, deren Polymere eine Glasumwandlungstemperatur < -15 °C zeigen. Es lassen sich $C_3$- bis $C_{10}$-Acrylate, wie z. B. Propylacrylat, Butylacrylat, Pentylacrylat, Hexylacrylat, Heptylacrylat, Octylacrylat, 2-Ethylhexylacrylat, Nonylacrylat, Decylacrylat, Phenylpropylacrylat, Phenoxyethoxyethylacrylat, und $C_8$- bis $C_{12}$-Methacrylate, wie Octylmethacrylat, Nonylmethacrylat, Decylmethacrylat, Undecylmethacrylat, Dodecylmethacrylat, einsetzen.

Als Monomeres mit 2 ethylenisch ungesättigten Bindungen kommen solche Verbindungen infrage, welche keine konjugierte Doppelbindung tragen, wie beispielsweise Divinylester von 2- und 3basigen Säuren, wie Divinyladipat, Diallylester von mono- bzw. polyfunktionellen Säuren, wie Diallylphthalat, Divinylether von mehrwertigen Alkoholen, wie Divinylether von Ethylenglykol, Di- und Tri-acrylate mehrwertiger Alkohole, wie Ethylenglykoldimethacrylat, Propylenglykoldimethacrylat etc. Diese Verbindungen haben eine vernetzende Funktion.

Als Katalysatoren für die Emulsionspolymerisation des Acrylsäureesters lassen sich die üblichen wasserlöslichen Perverbindungen einsetzen, wie $H_2O_2$, K-Persulfat, sowie die Redoxsysteme, wie sie in der Monographie von Kainer, Polyvinylchlorid und Vinylchlorid-Mischpolymerisate, Springer-Verlag, 1965, Seite 46 ff., angegeben sind.

Die Suspensionspolymerisation kann in beliebiger Weise in Gegenwart irgendeines der üblichen monomerlöslichen Katalysatoren durchgeführt werden, z. B. solchen aus den Gruppen der Diacyl-, Dialkyl- oder Aroylperoxide, wie beispielsweise Diacetyl-, Dibenzoyl-, Dilauroyl-, 2,4-Dichlorbenzoylperoxid; der Peroxidicarbonate, wie Diisopropyl-, Dicyclohexyl-, Di-tert.-butylcyclohexyl-, Diethylcyclohexyl-, Dimyristyl-, Dicetyl-, Distearylperoxidicarbonat; der Perester, wie Isopropyl-, tert.-Butylperacetat, tert.-Butylperoctoat, tert.-Butylperpivalat, tert.-Butyl-, Iso-Amylperneodecanoat; der gemischten Anhydride organischer Sulfopersäuren und organischer Säuren, wie z. B. Acetylcyclohexylsulfonylperoxid.

Als Azokatalysatoren kommen infrage Azoisobuttersäurenitril, Azobisdimethylvaleronitril oder ähnliche. Die Menge der Katalysatoren beträgt 0,01 bis 0,6 Gewichtsprozent, bezogen auf Vinylchlorid.

Als Suspensionsstabilisator für die Vinylchlorid-Polymerisation eignen sich Methylcelluloseether, vorzugsweise solche mit einem Methoxylsubstitutionsgrad von 1,6 bis 2,0. Die Viskosität der 2 %igen wäßrigen Lösung der Methylcellulose beträgt vorzugsweise 40 bis 3 000 mPa·s, insbesondere 60 bis 400 mPa·s.

Der monomerlösliche Katalysator wird dem Polymerisationsansatz in gelöster Form, z. B. in aromatischen oder aliphatischen Kohlenwasserstoffen, wie Benzol, Toluol, Cyclohexan, oder in wäßriger Suspension zugegeben.

Als Säure zur Neutralisation des Suspensionspolymerisationsansatzes eignen sich z. B. anorganische Säuren, wie Salzsäure, Schwefelsäure, Phosphorsäure, oder organische Säuren, wie Ameisensäure, Essigsäure, Oxalsäure, Citronensäure, vorzugsweise Weinsäure.

Bei der Suspensionspolymerisation kann man zweckmäßigerweise so vorgehen, daß man das vollentsalzte Wasser (VE-Wasser) und die Methylcellulose im Polymerisationsautoklaven vorlegt und die Polyacrylatdispersion unter langsamem Rühren zugibt, den Reaktor schließt, mit $N_2$ spült und das VC aufdrückt. Vorteilhafterweise wird nun auf ca. 50 °C aufgeheizt und das CaO in Form einer wäßrigen Suspension zugegeben. Dann wird gegebenenfalls noch weiter erhitzt bis zum Erreichen der Polymerisationstemperatur. Nun erfolgt die Zugabe einer zur Neutralisation ausreichenden Menge an Säure. Nach einigem Rühren, i. a. 10 Minuten lang, wird der Katalysator in gelöster oder suspendierter Form zugegeben. Man kann auch das $Ca(OH)_2$ und die Säure bei Raumtemperatur zugeben und erst nach der Zugabe des Katalysators auf Polymerisationstemperatur aufheizen.

Es kann erfindungsgemäß so viel an Polyacrylatdispersion vorgelegt werden, daß das Endprodukt 30 bis 70 Gewichtsprozent, vorzugsweise 30 bis 60 Gewichtsprozent, an Polyacrylat enthält.

Wird ein Azokatalysator eingesetzt, so kann das $Ca(OH)_2$ gleichfalls bei Raumtemperatur oder bei erhöhter Temperatur, z. B. von 50 °C bis zur Polymerisationstemperatur zugegeben werden. Anschließend an die Zugabe des Azokatalysators muß dann gegebenenfalls noch auf Polymerisationstemperatur aufgeheizt werden.

Die Erfindung wird durch folgende Beispiele und Vergleichsbeispiele erläutert.

Vergleichsbeispiel 1

Herstellung der Polybutylacrylat-Dispersion

| Reaktor: | 150-1-Metallautoklav | |
|---|---|---|
| Einsatzmengen: | | |
| Vorlage: | Teile | kg |
| VE-Wasser | 196,62 | 49,155 |
| Laurinsäure | 0,450 | 0,1126 |
| 1 n Natronlauge | 3,380 | 0,8450 |
| Ammoniumpersulfat | 0,030 | 0,0075 |
| Di-natriumtetraborat | 3,800 | 0,950 |

0195942

| Dosierung: | | Teile | kg |
|---|---|---|---|
| I. | Butylacrylat | 99,0 | 24,750 |
| | Diallylphthalat | 1,0 | 0,250 |
| II. | VE-Wasser | 100,00 | 25,00 |
| | Ammoniumsulfat | 0,060 | 0,015 |
| | Di-natriumtetraborat | 1,900 | 0,475 |

In den mit Blattrührer ausgerüsteten Reaktor werden VE-Wasser, Di-natriumtetraborat und die vorgelöste Laurinsäure, Natronlauge unter Rühren (n = 100 min$^{-1}$) eingefüllt.

Nachdem dreimal mit Stickstoff gespült und evakuiert worden ist, wird ein Druck von ca. 1 bar auf den Reaktor belassen. Es wird auf die Polymerisationstemperatur (80 °C) aufgeheizt. Der Initiator wird zugegeben und nach 10 Minuten 1,0 % der Monomermischung.

Nach Polymerisationsstart werden die Monomermischung und die Initiator/Borat-Lösung gleichmäßig innerhalb 4 Stunden zudosiert. Nach Dosierende werden noch weitere 4 Stunden bei 80 °C gerührt; anschließend abgekühlt und ausgefahren.

Suspensionspolymerisation

| Reaktor: | 235-1-Metallautoklav, Impellerrührer, Stromstörer | |
|---|---|---|

| Einsatzstoffe: | Teile | kg |
|---|---|---|
| VE-Wasser | 162,5 | 79,6 |
| Polyacrylat-Dispersion | 178,0 | 87,2 |
| Vinylchlorid | 55,5 | 27,8 |
| Methylhydroxypropylcellulose (Viskosität der 2-%igen wäßrigen Lösung 50 mPa·s) | 1,0 | 0,49 |
| Lauroylperoxid | 0,086 | 0,042 |

VE-Wasser, Suspensionsmittellösung und Initiator werden bei Raumtemperatur im Reaktor vorgelegt und die Polyacrylatdispersion unter langsamem Rühren zugegeben. Der Reaktor wird verschlossen, dreimal mit Stickstoff gespült und evakuiert. Es erfolgt die Zugabe von Vinylchlorid, danach die Drehzahleinstellung (270 bis 330 $min^{-1}$). Der Reaktormantel wird auf 60 °C aufgeheizt und bei dieser Temperatur bis zu einem Vinylchlorid-Restdruck von 3 bar gehalten. Der Reaktor wird abgekühlt. Die Suspension wird ausgefahren, der Feststoff abfiltriert und bei 50 °C im Vakuum auf Blechen getrocknet.

### Beispiel 1 (erfindungsgemäß)

| Reaktor: | 235-1-Metallautoklav, Impellerrührer, Stromstörer | |
|---|---|---|
| Einsatzstoffe: | Teile | kg |
| VE-Wasser | 162,5 | 79,6 |
| Polyacrylat-Dispersion (hergestellt nach Vgl.-Bsp. 1) | 178,0 | 87,2 |
| Vinylchlorid | 55,5 | 27,8 |
| Methylcellulose | 1,0 | 0,49 |
| Calciumoxid (als Ca(OH)$_2$) | 0,5 | 0,245 |
| Weinsäure | 1,37 | 0,67 |
| Lauroylperoxid gelöst in | 0,086 | 0,042 |
| Toluol | 0,31 | 0,15 |

VE-Wasser (vollentsalztes Wasser) und Suspensionsmittellösung (Methylcellulose mit einem Substitutionsgrad von 1,8, wobei die Viskosität der 2gewichtsprozentigen wäßrigen Lösung 60 mPa·s beträgt) werden bei Raumtemperatur im Reaktor vorgelegt und die Polyacrylatdispersion unter langsamem Rühren zugegeben. Der Reaktor wird verschlossen, dreimal mit Stickstoff gespült und evakuiert. Es erfolgt die Zugabe von Vinylchlorid, danach die Drehzahleinstellung (270 bis 330 $min^{-1}$).

Der Reaktormantel wird aufgeheizt. Bei 50 °C wird das Calciumoxid in Form einer wäßrigen Suspension zugefahren. Nach Erreichen der Polymerisationstemperatur (60 °C) wird die Weinsäure (gelöst in 5 l VE-Wasser) zugefahren. Zehn Minuten danach erfolgt die Zugabe des Initiators in Form einer toluolischen Lösung. Bei Erreichen eines Vinylchlorid-Restdruckes von 3,0 bar wird abgekühlt, ausgefahren, filtriert und das feste Produkt auf Blechen bei 50 °C im Vakuum getrocknet.

Polymerisationsergebnis

|  | Schüttdichte (g/l) | Korngrößen-Verteilung (%) | | | Bemerkungen |
|---|---|---|---|---|---|
|  |  | > 63 μm | > 100 μm | > 400 μm |  |
| Bsp. 1 (erfindungsgemäß) | 450 | 100 | 90 | 3 | rieselfähig |
| Vgl.-Bsp. 1 (nicht erfindungsgemäß) | 290 | Siebanalyse nicht möglich, da Produkt verklebt | | | |

Die unerwarteten Effekte der erfindungsgemäßen Arbeitsweise bestehen zum einen darin, daß das Endprodukt trotz des überaus hohen Gehalts an Polyacrylat-Elastomerem von ∼50 Gewichtsprozent nicht klebend, sondern rieselfähig ist und eine erwünscht enge Korngrößenverteilung und gute Schüttdichte zeigt. Zum anderen zeigt sich der unerwartete Vorteil darin, daß bei Polymerisation die Reaktorwand wandbelagsfrei bleibt.

Beispiel 2 (erfindungsgemäß)

Herstellung der Polybutylacrylat-Dispersion nach Arbeitsweise b)

Reaktor:              150-l-Metallautoklav
Dosierung:            rührbare Vorlage
Einsatzmengen:
Vorlage:              Teile        kg
VE-Wasser             57,5         29,59
(vollentsalztes Wasser)
Laurylsulfat          0,09         0,0463
Ammoniumpersulfat     0,02         0,0103
Dosierung:
VE-Wasser             65,0         33,45
Laurylsulfat          0,19         0,0978
Ammoniumpersulfat     0,055        0,0283
Natriumcarbonat (wasser-  0,50     0,2573
frei)

| Butylacrylat | 99,0 | 50,94 |
|---|---|---|
| Diallylphthalat | 1,0 | 0,5146 |
| **Nachsatz:** | | |
| VE-Wasser | 5,0 | 2,57 |
| Laurinsäure | 0,766 | 0,3942 |
| 1 n NaOH | 5,7 | 2,93 |

In den mit Blattrührer ausgerüsteten Reaktor werden VE-Wasser und Laurylsulfat unter Rühren eingesetzt. Nachdem dreimal mit Stickstoff gespült und evakuiert worden ist, wird ein Druck von ca. 1 bar auf dem Reaktor belassen. Es wird auf Polymerisationstemperatur (80 °C) aufgeheizt. Bei 80 °C wird der Initiator zugegeben, 10 Minuten später setzt die Dosierung ein.

Die Bestandteile der Dosierung werden in einer rührbaren Vorlage homogenisiert (30 Minuten) ($N_2$ überleiten) und innerhalb 4 Stunden gleichmäßig zudosiert.

Danach wird 1 Stunde bei 80 °C weitergerührt, dann erfolgt die Zugabe der Natriumlauratlösung (Zusatz) ebenfalls über die Vorlage. Nach weiterem Rühren bei 80 °C (1 Stunde) wird abgekühlt und ausgefahren.

Die so erhaltene Polybutylacrylatdispersion hat einen Feststoffgehalt von ca. 42,9 Gewichtsprozent.

Suspensionspolymerisation Beispiel 2

Änderung gegenüber Beispiel 1: unterschiedlicher Feststoff der eingesetzten Dispersionen

| Einsatzstoffe: | Teile | kg |
|---|---|---|
| VE-Wasser | 236,7 | 116,0 |
| Polyacrylat-Dispersion | 103,7 | 50,8 |

Ansonsten wurde wie in Beispiel 1 verfahren. Es entstand analog wie bei Beispiel 1 ein rieselfähiges Produkt. Die Reaktorwand war belagsfrei geblieben.

0195942

- 1 -                    O.Z. 4062

Patentansprüche:

1. Verfahren zur Herstellung eines rieselfähigen Polyvinylchlorids einem Acrylatgehalt von mindestens 30 Gewichtsprozent durch Emulsionspolymerisation des Acrylsäureesters in Gegenwart eines wasserlöslichen Katalysators unter Zusatz eines Monomeren mit mindestens 2 ethylenisch ungesättigten nicht konjugierten Bindungen und anschließender Suspensionspolymerisation von Vinylchlorid in Gegenwart der Polyacrylsäureesterdispersion,

dadurch gekennzeichnet,

daß

die Emulsionspolymerisation eines Acrylsäureesters, dessen Polymere eine Glasumwandlungstemperatur < -15 °C zeigen,

a) in Gegenwart eines Alkalisalzes einer 12 bis 18 C-Atome enthaltenden Fettsäure als Emulgator mit einem Ausgangs-pH-Wert > 9, gegebenenfalls in Gegenwart eines Puffers, oder

b) in Gegenwart von Alkali-Laurylsulfat, und zwar durch absatzweise oder kontinuierliche Zugabe des mit einer wäßrigen Alkali-Laurylsulfatlösung voremulgierten Monomeren während der Polymerisation erfolgt,

und die Vinylchlorid-Polymerisation in Gegenwart einer Methylcellulose als Suspensionsmittel durchgeführt wird, wobei nach der Suspensionsmittelzugabe eine $Ca(OH)_2$-Suspension zugefügt, der Polymerisationsansatz durch Zugabe einer Säure neutralisiert und sodann ein organisches Peroxid als Initiator in gelöster oder suspendierter Form zugegeben wird.

2. Verfahren zur Herstellung eines rieselfähigen Polyvinylchlorids mit einem Acrylatgehalt von mindestens 30 Gewichtsprozent durch Emulsionspolymerisation des Acrylsäureesters in Gegenwart eines wasserlöslichen Katalysators unter Zusatz eines Monomeren mit mindestens 2 ethylenisch ungesättigten nicht konjugierten Bindungen und anschließender Suspensionspolymerisation von Vinylchlorid in Gegenwart der Polyacrylsäureesterdispersion,

dadurch gekennzeichnet,

daß

die Emulsionspolymerisation eines Acrylsäureesters, dessen Polymere eine Glasumwandlungstemperatur < -15 °C zeigen,

a) in Gegenwart eines Alkalisalzes einer 12 bis 18 C-Atome enthaltenden Fettsäure als Emulgator mit einem Ausgangs-pH-Wert > 9, gegebenenfalls in Gegenwart eines Puffers, oder

b) in Gegenwart von Alkali-Laurylsulfat, und zwar durch absatzweise oder kontinuierliche Zugabe des mit Alkali-Laurylsulfat voremulgierten Monomeren während der Polymerisation erfolgt,

und die Vinylchlorid-Polymerisation in Gegenwart einer Methylcellulose als Suspensionsmittel durchgeführt wird, wobei nach der Suspensionsmittelzugabe eine $Ca(OH)_2$-Suspension zugefügt und sodann ein Azokatalysator in gelöster oder suspendierter Form zugegeben wird.

3. Verfahren nach den Ansprüchen 1 oder 2, dadurch gekennzeichnet, daß die $Ca(OH)_2$-Suspension bei einer Temperatur von 50 °C bis zur Polymerisationstemperatur zugegeben wird.

4. Verfahren nach einem der Ansprüche 1 bis 3, dadurch gekennzeichnet, daß die Zugabemenge an $Ca(OH)_2$ 0,6 bis 1,5 Gewichtsprozent (gerechnet als CaO), bezogen auf eingesetztes Polyacrylat, beträgt.

5. Verfahren nach einem der Ansprüche 1 bis 4, dadurch gekennzeichnet, daß die Methylcellulose eine Viskosität der 2 %igen wäßrigen Lösung von 40 bis 3 000 mPa·s und einen Substitutionsgrad von 1,6 bis 2,0 zeigt.

6. Verfahren nach einem der Ansprüche 1 oder 3 bis 5, dadurch gekennzeichnet, daß der Suspensionspolymerisationsansatz vor der Zugabe des organischen Peroxids mit Weinsäure neutralisiert wird.

7. Verfahren nach einem der Ansprüche 1 bis 6,
dadurch gekennzeichnet,
daß bei der Emulsionspolymerisation nach der Arbeitsweise b) die
Alkalilaurylsulfatkonzentration 0,3 bis 0,7 Gewichtsprozent, bezogen
auf Acrylatmonomer, beträgt.

8. Verfahren nach einem der Ansprüche 1 bis 7,
dadurch gekennzeichnet,
daß nach der Emulsionspolymerisation gemäß Arbeitsweise b) das Alkalisalz einer 12 bis 18 C-Atome enthaltenden Fettsäure zugegeben wird.